# FASCICULE DE BREVET EUROPEEN

(11) **EP 3 492 368 B1**
(45) Date de publication et mention de la délivrance du brevet: **19.05.2021**
(21) Numéro de dépôt: 18208857.5
(22) Date de dépôt: 28.11.2018
(51) Int. Cl.: B64C 1/26, B64C 3/18

(54) **NERVURE DE JONCTION VOILURE-CAISSON DE VOILURE POUR AERONEF ET PROCEDE DE FABRICATION D'UN AERONEF AU MOYEN D'UNE TELLE NERVURE**
WURZELRIPPE ZUM VERBINDEN EINES TRAGFLÜGELS MIT EINEM FLÜGELKASTEN, UND HERSTELLUNGSVERFAHREN EINES LUFTFAHRZEUGS MIT EINER SOLCHEN RIPPE
ROOT RIB FOR JOINING AN AIRCRAFT WING TO A WING BOX AND METHOD OF MANUFACTURING AN AIRCRAFT WITH SUCH A RIB

(30) Priorité: 29.11.2017 FR 1761378
(43) Date de publication de la demande: 05.06.2019
(73) Titulaire: AIRBUS OPERATIONS (SAS), 31060 Toulouse (FR)
(72) Inventeur: BATALLA, Franck, 31490 Léguevin (FR); SOULA, Denis, 31300 Toulose (FR); MAQUEDA LAHOZ, Javier, 31770 Colomiers (FR)
(74) Mandataire: Brevalex

(56) Documents cités:
- EP-A1- 3 138 770
- WO-A2-2008/105805
- WO-A2-2011/158015
- FR-A1- 2 916 417
- US-A1- 2009 136 294
- US-A1- 2011 089 292

## Description

### DOMAINE TECHNIQUE

La présente invention se rapporte au domaine de la structure des aéronefs, et concerne plus particulièrement une nervure de jonction destinée à la jonction voilure-caisson central de voilure d'un aéronef, un procédé de fabrication d'une telle nervure de jonction, l'utilisation de cette nervure de jonction ou de ce procédé au sein d'un procédé de fabrication d'un module central de voilure pour aéronef, l'utilisation de ce dernier procédé au sein d'un procédé de fabrication d'un tronçon de fuselage pour aéronef, et enfin l'utilisation de ce dernier procédé au sein d'un procédé de fabrication d'un aéronef.

### ÉTAT DE LA TECHNIQUE ANTÉRIEURE

Dans un aéronef comportant un fuselage et une voilure comportant deux ailes symétriques opposées fixées au fuselage, le fuselage intègre en général une structure en forme de caisson, dénommée « caisson central de voilure », sur laquelle sont fixées des structures respectives des ailes, également en forme de caissons et généralement dénommées « caissons latéraux de voilure ».

Le caisson central de voilure comporte typiquement un panneau supérieur, également dénommé panneau extrados, un panneau inférieur, également dénommé panneau intrados, ainsi qu'un longeron avant et un longeron arrière qui relient chacun le panneau inférieur au panneau supérieur. Le caisson central de voilure intègre en général des nervures internes de rigidification reliant entre eux les panneaux inférieur et supérieur et les longerons avant et arrière.

La jonction de chaque aile au fuselage est assurée par une nervure de jonction jouant le rôle d'interface structurelle entre le caisson latéral de voilure correspondant et le caisson central de voilure.

La nervure de jonction comporte en général une âme, et un ensemble d'éléments profilés en croix ou en té agencés en périphérie de l'âme et fixés sur celle-ci au moyen de boulons de cisaillement, comme montré par exemple à la page 283 de l'ouvrage de Michael Chun-Yung Niu, Airframe Structural Design (1988).

Chacun des éléments profilés comporte une ailette ou branche qui est fixée sur un panneau ou longeron correspondant du caisson central de voilure, conjointement avec une ou plusieurs ferrures en équerre, et une autre ailette ou branche qui est fixée sur un panneau ou longeron correspondant du caisson latéral de voilure, conjointement avec une ou plusieurs autres ferrures en équerre. La fixation des ailettes et ferrures aux panneaux et longerons est en général réalisée au moyen de boulons de cisaillement

L'état de l'art est également illustré par le document WO-A2-2011/158015.

La configuration de ces éléments (nervure et éléments profilés) oblige à ce que les opérations de mise en place et de fixation d'une majeure partie de ces éléments interviennent dans des phases avancées du processus d'assemblage de l'aéronef, notamment dans la phase d'assemblage final au cours de laquelle les ailes sont fixées au fuselage.

Or, la phase d'assemblage final est une phase particulièrement coûteuse au regard de l'ensemble du processus d'assemblage d'un aéronef.

### EXPOSÉ DE L'INVENTION

L'invention a notamment pour but d'apporter une solution simple, économique et efficace à ce problème.

Elle propose à cet effet une nervure de jonction destinée à la jonction voilure-caisson central de voilure d'un aéronef, comprenant un voile principal, ainsi qu'une ailette supérieure et une ailette inférieure qui s'étendent à partir du voile principal, d'un premier côté par rapport au voile principal.

Le voile principal présente une surface de jonction agencée d'un deuxième côté opposé au premier côté, le voile principal comportant des rangées d'orifices débouchant du deuxième côté dans la surface de jonction et du premier côté, les rangées d'orifices comprenant au moins une première rangée d'orifices formée dans une partie supérieure du voile principal et s'étendant d'un côté avant vers un côté arrière de la nervure de jonction, et une deuxième rangée d'orifices formée dans une partie inférieure du voile principal et s'étendant du côté avant vers le côté arrière de la nervure de jonction, chacune des rangées d'orifices comprenant des orifices à l'état libre.

Par « partie supérieure » et « partie inférieure », il faut comprendre que la partie supérieure s'étend de manière générale au-dessus de la partie inférieure.

Par « orifices à l'état libre », il faut comprendre que les orifices sont inoccupés, c'est-à-dire aptes à recevoir ultérieurement des organes de fixation.

La nervure de jonction ainsi réalisée permet la jonction d'une aile à un tronçon de fuselage d'aéronef d'une manière particulièrement simple et efficace, permettant en particulier de minimiser le nombre et la complexité des opérations restant à mettre en œuvre au stade d'assemblage final de l'aéronef, comme cela apparaîtra plus clairement dans ce qui suit.

De plus, les rangées d'orifices comprennent une troisième rangée d'orifices formée dans la partie supérieure du voile principal et s'étendant du côté avant vers le côté arrière de la nervure de jonction, de sorte que les première et troisième rangées d'orifices sont agencées respectivement de part et d'autre de l'ailette supérieure.

Le voile principale est ainsi apte à reprendre directement des efforts de traction de ferrures supérieures, comme cela apparaîtra plus clairement dans ce qui suit.

De préférence, la nervure de jonction comporte une extension qui est inclinée par rapport à la surface de jonction et qui s'étend du deuxième côté à partir d'une extrémité supérieure de la partie supérieure du voile principal, de manière à former un angle obtus avec l'ailette supérieure en section transversale.

De préférence, la nervure de jonction comporte en outre une ailette avant et une ailette arrière qui s'étendent à partir du voile principal, du premier côté par rapport au voile principal, et les rangées d'orifices comprennent en outre une quatrième rangée d'orifices formée dans une partie avant du voile principal et s'étendant d'un côté inférieur vers un côté supérieur de la nervure de jonction, et une cinquième rangée d'orifices formée dans une partie arrière du voile principal et s'étendant du côté inférieur vers le côté supérieur de la nervure de jonction.

L'invention concerne également un procédé de fabrication d'une nervure de jonction du type décrit ci-dessus, comprenant au moins les étapes suivantes :
- a) mettre à disposition une âme, et des éléments profilés comprenant chacun une embase respective et une ailette respective s'étendant en saillie à partir de l'embase ; puis
- b) fixer les embases respectives des éléments profilés à l'âme, de sorte que les ailettes respectives des éléments profilés s'étendent d'un premier côté par rapport à l'âme, correspondant audit premier côté, les embases respectives des éléments profilés et l'âme formant ensemble ledit voile principal ;
et dans lequel, au terme du procédé, le voile principal comporte les rangées d'orifices comprenant au moins ladite première rangée d'orifices, formée dans l'embase d'un premier des éléments profilés, dit profilé supérieur, et ladite deuxième rangée d'orifices, formée dans l'embase d'un deuxième des éléments profilés, dit profilé inférieur, les profilés supérieur et inférieur étant agencés à deux extrémités opposées de l'âme, dites extrémité supérieure et extrémité inférieure, de sorte que l'embase du profilé supérieur forme ladite partie supérieure du voile principal et que l'ailette du profilé supérieur forme ladite ailette supérieure, et de sorte que l'embase du profilé inférieur forme ladite partie inférieure du voile principal et que l'ailette du profilé inférieur forme ladite ailette inférieure, l'embase du profilé supérieur s'étendant de part et d'autre de l'ailette du profilé supérieur et comprenant la troisième rangée d'orifices, et chacune des rangées d'orifices comprenant des orifices à l'état libre.

De préférence, chacun des éléments profilés autres que le profilé supérieur présente une configuration en équerre.

De préférence, le procédé comprend en outre les étapes suivantes :
- c) mettre à disposition des premières ferrures en équerre, dites pieds de cadres internes, comprenant chacune une semelle et un talon respectifs ; puis
- d) après l'étape b), fixer les semelles respectives des pieds de cadres internes sur le voile principal.

Le cas échéant, les rangées d'orifices comprennent en outre avantageusement la quatrième rangée d'orifices, formée dans un troisième des éléments profilés, dit profilé avant, et la cinquième rangée d'orifices, formée dans un quatrième des éléments profilés, dit profilé arrière, les profilés avant et arrière étant agencés à deux extrémités opposées de l'âme, dites extrémité avant et extrémité arrière respectivement, qui relient chacune l'extrémité supérieure à l'extrémité inférieure de l'âme, de sorte que l'embase du profilé avant forme ladite partie avant du voile principal et que l'ailette du profilé avant forme ladite ailette avant, et de sorte que l'embase du profilé arrière forme ladite partie arrière du voile principal et que l'ailette du profilé arrière forme ladite ailette arrière.

L'invention concerne aussi un procédé de fabrication d'un module central de voilure pour aéronef, comprenant les étapes suivantes :
- A) fabriquer au moins une nervure de jonction du type décrit ci-dessus, éventuellement au moyen du procédé du type décrit ci-dessus ;
- B) mettre à disposition au moins une deuxième ferrure en équerre, dite ferrure externe supérieure, comprenant une semelle et un talon ;
- C) mettre à disposition au moins une éclisse ;
- D) mettre à disposition un caisson central de voilure, comportant au moins un panneau supérieur, un panneau inférieur, un longeron avant reliant une extrémité avant du panneau supérieur à une extrémité avant du panneau inférieur, et un longeron arrière reliant une extrémité arrière du panneau supérieur à une extrémité arrière du panneau inférieur, de sorte que les panneaux supérieur et inférieur et les longerons avant et arrière délimitent un espace interne du caisson central de voilure ouvert en au moins une extrémité latérale du caisson central de voilure ; puis
- E) disposer la nervure de jonction à ladite extrémité latérale du caisson central de voilure, en insérant les ailettes dans l'espace interne du caisson central de voilure, de sorte que l'ailette supérieure soit en regard du panneau supérieur et que l'ailette inférieure soit en regard du panneau inférieur ; puis
- F) fixer conjointement l'ailette supérieure et la semelle de ladite au moins une ferrure externe supérieure au panneau supérieur au moyen de premiers organes de fixation traversants, et fixer conjointement l'ailette inférieure et une partie proximale de ladite au moins une éclisse au panneau inférieur au moyen de deuxièmes organes de fixation traversants, de sorte qu'une partie distale de ladite au moins une éclisse s'étende au-delà de la surface de jonction dans une direction d'éloignement par rapport au caisson central de voilure.

Le cas échéant, l'étape F) comporte en outre avantageusement la fixation des ailettes avant et arrière respectivement aux longerons avant et arrière.

De préférence, la partie distale de ladite au moins une éclisse forme, en section transversale, un angle par rapport à la partie proximale de ladite au moins une éclisse.

Le cas échéant, le talon de ladite au moins une ferrure externe supérieure comporte avantageusement des orifices respectivement alignés avec les orifices de la troisième rangée d'orifices.

L'invention concerne aussi un procédé de fabrication d'un tronçon de fuselage pour aéronef, comprenant les étapes suivantes :
- i) fabriquer un module central de voilure pour aéronef selon un procédé du type décrit ci-dessus ;
- ii) mettre à disposition une structure de fuselage ;
- iii) fixer ladite au moins une ferrure externe supérieure à la structure de fuselage.

Dans des modes de réalisation préférés :
- la structure de fuselage comporte des cadres circonférentiels pourvus de troisièmes ferrures en équerre respectives, dites pieds de cadres externes, comprenant chacune une semelle et un talon respectifs ; et
- l'étape iii) comporte la fixation des talons respectifs des pieds de cadres externes respectivement aux talons respectifs des pieds de cadres internes au moyen de troisièmes organes de fixation traversants.

Dans des modes de réalisation préférés, la structure de fuselage comporte une peau, et l'étape iii) comporte la fixation de la peau sur l'extension au moyen de quatrièmes organes de fixation traversants.

L'invention concerne aussi un procédé de fabrication d'un aéronef, comprenant les étapes consistant à :
- I) fabriquer un tronçon de fuselage selon un procédé du type décrit ci-dessus ;
- II) mettre à disposition au moins une aile comportant un caisson latéral de voilure délimitant un espace interne ; puis
- III) positionner une extrémité du caisson latéral de voilure en regard de la surface de jonction, de sorte que la partie distale de ladite au moins une éclisse soit positionnée à l'extérieur de l'espace interne du caisson latéral de voilure ; puis
- IV) fixer le caisson latéral de voilure à la nervure de jonction au moyen d'organes de fixation travaillant en traction/compression engagés respectivement dans les orifices desdites rangées d'orifices, et fixer le caisson latéral de voilure à la partie distale de ladite au moins une éclisse au moyen de cinquièmes organes de fixation traversants.

De préférence :
- le caisson latéral de voilure comporte un panneau supérieur et un panneau inférieur, ainsi qu'au moins une quatrième ferrure en équerre et au moins une cinquième ferrure en équerre ;
- lesdites au moins une quatrième et cinquième ferrures en équerre comprennent chacune une semelle et un talon respectifs ;
- la semelle de ladite au moins une quatrième ferrure en équerre est fixée sur le panneau supérieur du caisson latéral de voilure, à l'intérieur de l'espace interne du caisson latéral de voilure ;
- la semelle de ladite au moins une cinquième ferrure en équerre est fixée sur le panneau inférieur du caisson latéral de voilure, à l'intérieur de l'espace interne du caisson latéral de voilure ;
- lesdits organes de fixation travaillant en traction/compression comprennent des sixièmes organes de fixation traversants montés conjointement au travers d'orifices formés dans le talon de ladite au moins une quatrième ferrure en équerre et des orifices de la première rangée d'orifices ; et
- lesdits organes de fixation travaillant en traction/compression comprennent des septièmes organes de fixation traversants montés conjointement au travers d'orifices formés dans le talon de ladite au moins une cinquième ferrure en équerre et des orifices de la deuxième rangée d'orifices.

Dans des modes de réalisation préférés :
- le caisson latéral de voilure comporte au moins une sixième ferrure en équerre comprenant une semelle et un talon ;
- la semelle de ladite au moins une sixième ferrure en équerre est fixée sur le panneau supérieur à l'extérieur de l'espace interne du caisson latéral de voilure ; et
- lesdits organes de fixation travaillant en traction/compression comprennent des huitièmes organes de fixation traversants montés conjointement au travers d'orifices formés dans le talon de ladite au moins une sixième ferrure en équerre, des orifices de la troisième rangée d'orifices, et des orifices du talon de ladite au moins une ferrure externe supérieure.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- les figures 1 à 3 sont des vues schématiques en perspective d'un élément profilé destiné à la fabrication d'une nervure de jonction, au cours d'étapes successives de fabrication de l'élément profilé ;
- la figure 4 est une vue schématique en perspective d'éléments destinés à la fabrication de la nervure de jonction ;
- la figure 5 est une vue schématique en perspective des composants de la figure 4 assemblés pour former la nervure de jonction ;
- la figure 6 est une vue agrandie d'une partie de la figure 5 ;
- la figure 7 est une vue semblable à la figure 5, illustrant la nervure de jonction à un stade ultérieur de sa fabrication ;
- la figure 8 est une vue agrandie d'une partie de la figure 7 ;
- la figure 9 est une vue semblable à la figure 7 mais sous un autre angle ;
- les figures 10 et 11 sont des vues schématiques, respectivement en coupe transversale et en perspective, de la nervure de jonction et d'autres éléments destinés à la fabrication d'un module central de voilure ;
- la figure 12 est une vue schématique partielle en perspective du module central de voilure formé par l'assemblage des éléments des figures 10 et 11 ;
- les figures 13 et 14 sont des vues agrandies de parties de la figure 12 ;
- les figures 15 et 16 sont des vues schématiques partielles en coupe transversale d'un tronçon de fuselage pour aéronef intégrant le module central de voilure de la figure 12;
- la figure 17 est une vue schématique partielle en coupe transversale du tronçon de fuselage et d'une aile ;
- la figure 18 est une vue semblable à la figure 17, illustrant l'aile assemblée au tronçon de fuselage ;
- la figure 19 est une vue schématique en perspective d'un aéronef comprenant l'aile et le tronçon de fuselage de la figure 18 ;
- la figure 20 est un organigramme d'un procédé de fabrication d'aéronef selon un mode de réalisation préféré de l'invention.

### EXPOSÉ DÉTAILLÉ DE MODES DE RÉALISATION PRÉFÉRÉS

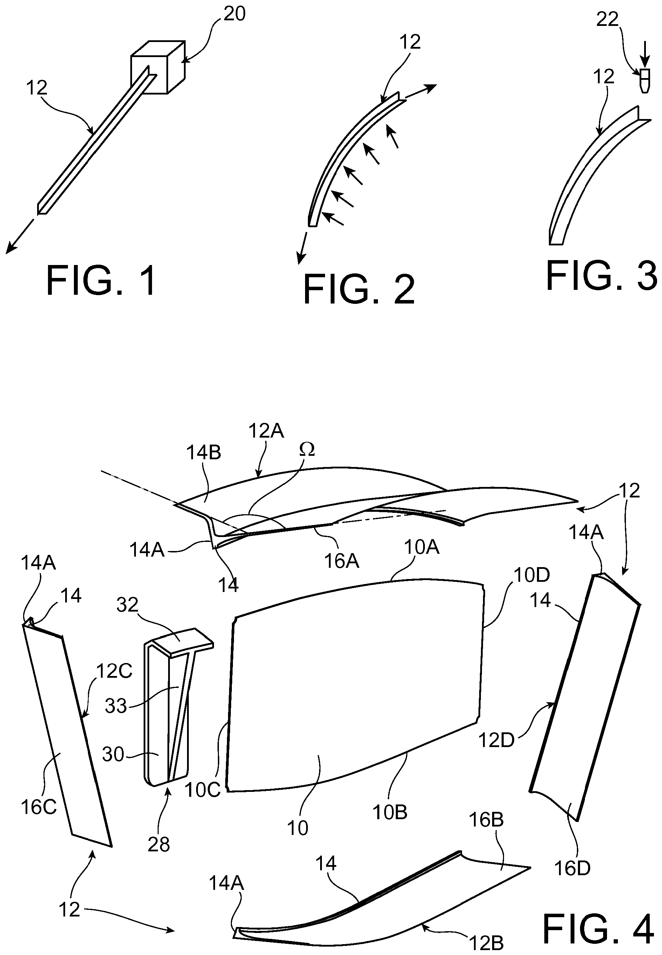

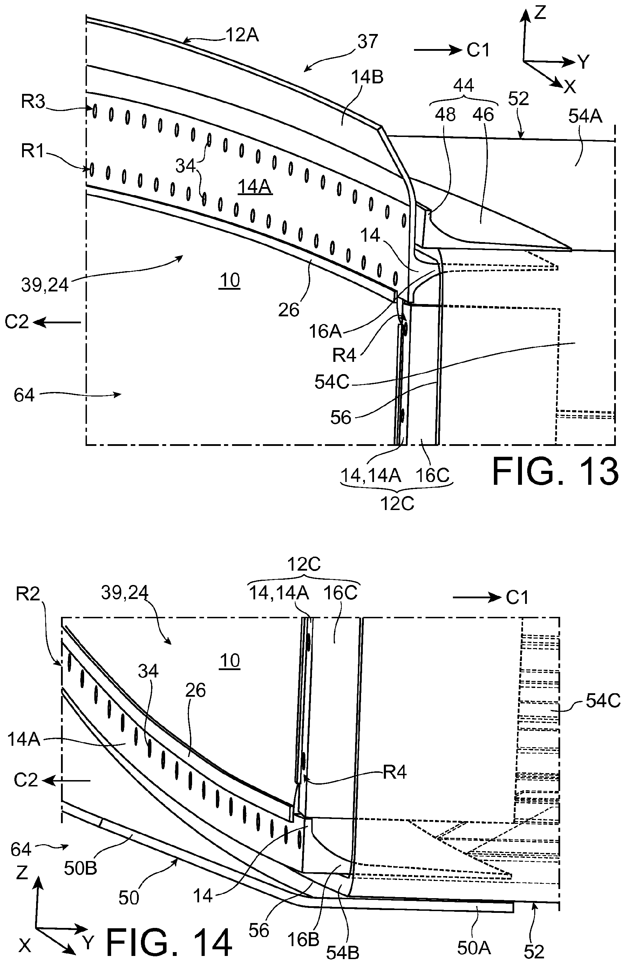

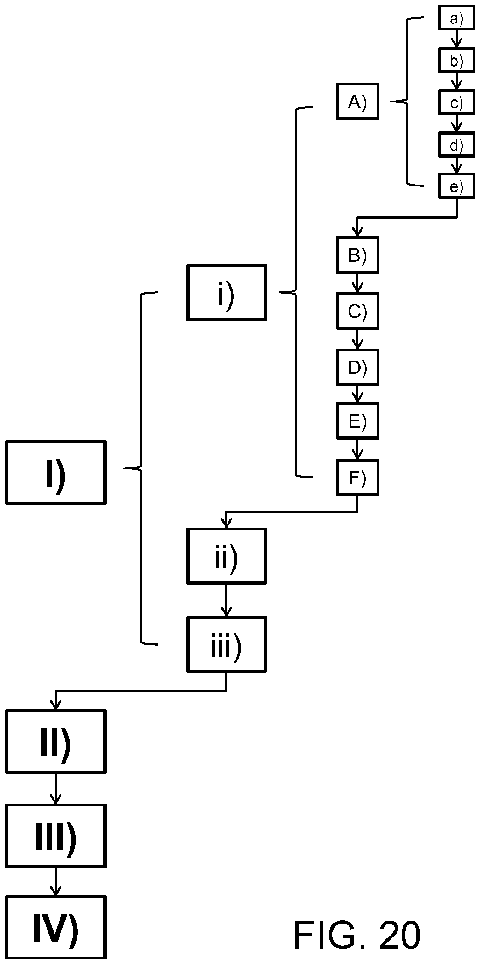

Une nervure de jonction destinée à la jonction voilure-caisson central de voilure d'un aéronef selon un mode de réalisation préféré de l'invention, et un procédé de fabrication d'un aéronef selon un mode de réalisation préféré de l'invention, mettant à profit des avantages procurés par ladite nervure de jonction, vont maintenant être décrits en référence aux figures 1 à 19 qui illustrent successivement différentes étapes du procédé, et en référence permanente à la figure 20 qui montre un organigramme global du procédé.

Dans la description qui suit, les directions X, Y et Z sont définies par référence à l'orientation des éléments au sein de l'aéronef au terme du procédé de fabrication de ce dernier. La direction longitudinale X est définie conventionnellement comme étant parallèle à l'axe de roulis de l'aéronef, la direction transversale Y comme étant parallèle à l'axe de tangage de l'aéronef, et la direction verticale Z comme étant parallèle à l'axe de lacet de l'aéronef.

Le procédé de fabrication de l'aéronef comporte d'abord une étape I) consistant à fabriquer un tronçon de fuselage.

L'étape I) comporte elle-même une étape i) consistant à fabriquer un module central de voilure.

L'étape i) comporte une étape A) qui consiste à fabriquer au moins une nervure de jonction, et qui va maintenant être décrite en détail.

À titre d'exemple, la nervure de jonction considérée est destinée à équiper le côté droit de l'aéronef.

En référence à la figure 4, l'étape A) comporte une première étape a) consistant à mettre à disposition une âme 10, et des éléments profilés 12 comprenant chacun une embase respective 14 présentant une face principale 14A, et une ailette respective 16A-16D s'étendant en saillie à partir de l'embase 14, d'un côté opposé à la face principale 14A.

En référence aux figures 1 à 3, chacun des éléments profilés 12 peut avantageusement être fabriqué au moyen d'un procédé comportant une étape d'extrusion d'un matériau destiné à former l'élément 12, au travers d'une filière 20 (figure 1) configurée pour former l'embase 14 et l'ailette 16, puis une étape éventuelle de formage de l'élément 12 (figure 2) permettant de conférer un cintrage à l'élément 12.

La conformation des éléments profilés 12 se prête bien à une fabrication par extrusion, qui permet la fabrication de profilés d'un seul tenant à un coût considérablement inférieur aux techniques de forgeage utilisées parfois pour la fabrication des éléments profilés en croix ou en té de l'art antérieur.

Le procédé de fabrication préalable des éléments profilés 12 peut en outre comporter une étape d'usinage de l'élément 12 au moyen d'un outil d'usinage 22 (figure 3) permettant éventuellement de parfaire l'état de surface de l'élément 12 et, le cas échant, de former des orifices au travers de l'embase 14 et d'éventuels lamages autour de chacun des orifices (les orifices et lamages n'étant pas visibles sur les figures 1-4). Dans le mode de réalisation préféré de l'invention, l'étape de formation des orifices précités est toutefois mise en œuvre ultérieurement, comme cela apparaîtra plus clairement dans ce qui suit.

Comme le montre la figure 4, les éléments profilés comprennent un premier élément profilé, dit profilé supérieur 12A, un deuxième élément profilé, dit profilé inférieur 12B, un troisième élément profilé, dit profilé avant 12C, et un quatrième élément profilé, dit profilé arrière 12D.

Les profilés supérieur 12A et inférieur 12B sont agencés au niveau de deux extrémités opposées de l'âme 10, à savoir une extrémité supérieure 10A et une extrémité inférieure 10B. De manière analogue, les profilés avant 12C et arrière 12D sont agencés au niveau de deux autres extrémités opposées de l'âme 10, à savoir une extrémité avant 10C et une extrémité arrière 10D, qui relient chacune l'extrémité supérieure 10A à l'extrémité inférieure 10B.

Chaque élément, parmi le profilé inférieur 12B, le profilé avant 12C, et le profilé arrière 12D, est intégralement constitué par son embase 14 respective et son ailette 16B-16D respective. De plus, l'embase 14 de chacun de ces éléments profilés s'étend à partir d'une extrémité de l'ailette 16B-16D correspondante. Ces trois éléments profilés présentent ainsi chacun une configuration dite « en équerre ». Dans la terminologie de la présente invention, l'expression « en équerre » entend couvrir une configuration dans laquelle l'ailette 16B-16D est orthogonale, ou inclinée d'un angle supérieur à 45 degrés, par rapport à la face principale 14A de l'embase 14.

En revanche, l'embase 14 du profilé supérieur 12A, et en particulier la face principale 14A de celle-ci, s'étendent de part et d'autre de l'ailette 16A de ce profilé supérieur, à une extrémité de ladite ailette.

De plus, l'embase 14 du profilé supérieur 12A comporte une extension 14B qui est inclinée par rapport à la surface de jonction 24 s'étendant à partir d'une extrémité supérieure de la face principale 14A correspondante, en étant inclinée par rapport à cette dernière, de sorte que l'extension 14B et l'ailette supérieure 16A forment un angle obtus Ω et s'étendent de deux côtés opposés par rapport à la face principale 14A correspondante.

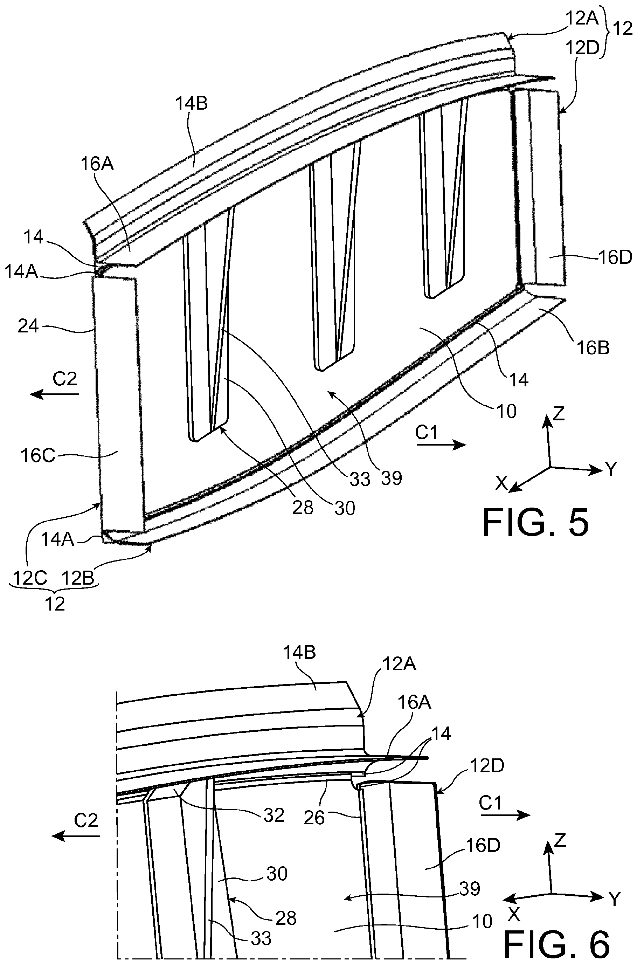

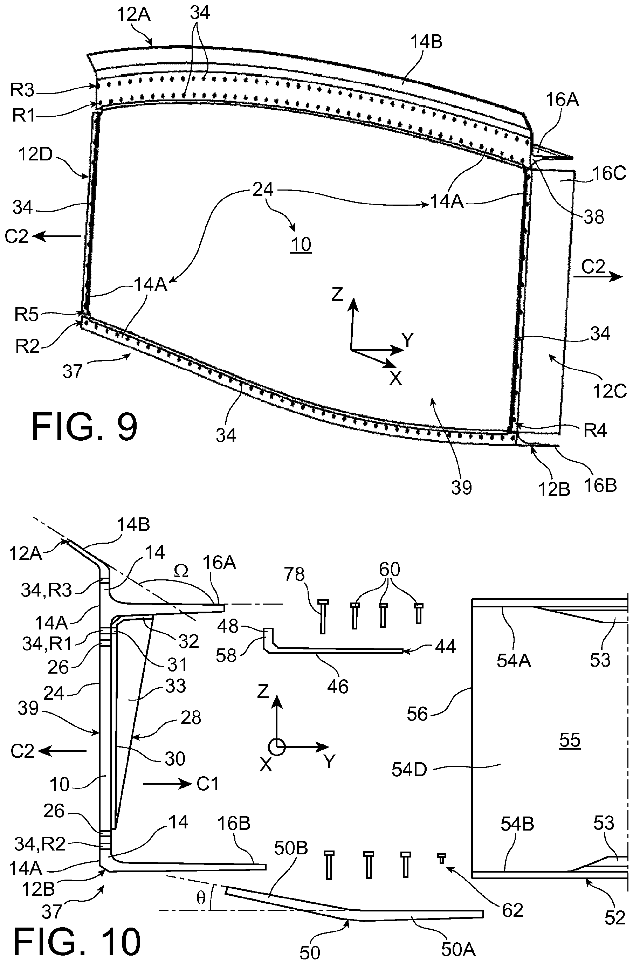

L'étape A) comporte ensuite une étape b) consistant à fixer les embases respectives 14 des éléments profilés 12 à l'âme 10, de sorte que les ailettes respectives 16A-16D des éléments profilés s'étendent d'un premier côté C1 par rapport à l'âme 10, comme cela apparaît sur la figure 5, et de sorte que les embases respectives 14 des éléments profilés 12 et l'âme 10 forment ensemble un voile principal 39, qui présente une surface de jonction 24, préférentiellement continue, agencée d'un deuxième côté C2 opposé par rapport au premier côté C1, comme cela apparaîtra plus clairement dans ce qui suit (figure 9). La surface de jonction 24 inclut ainsi les faces principales 14A des embases 14. Comme le montre la figure 5, l'extension 14B de l'embase du profilé supérieur 12A s'étend donc du deuxième côté C2.

Dans le mode de réalisation préféré de l'invention, la fixation des embases 14 à l'âme 10 est réalisée par soudage par friction malaxage (FSW) bord-à-bord. La figure 6 permet ainsi d'apercevoir des cordons de soudure 26 à l'interface entre des embases 14 et l'âme 10.

L'étape A) comprend par ailleurs une étape c) consistant à mettre à disposition des premières ferrures en équerre 28, dites pieds de cadres internes, comprenant chacune une semelle 30 et un talon 32 respectifs (l'un de ces pieds de cadres internes étant visible sur la figure 4). Chacun des pieds de cadres internes 28 comporte en outre un voile de raidissement 33 en forme de rampe.

Après les étapes b) et c), l'étape A) comporte une étape d) consistant à fixer les semelles 30 respectives des pieds de cadres internes 28 sur le voile principal 39, typiquement sur au moins un élément parmi l'âme 10 et l'embase 14 du profilé supérieur 12A, de sorte que les talons 32 respectifs des pieds de cadres internes 28 soient disposés en regard, et de préférence au contact, de l'ailette 16A du profilé supérieur 12A. Dans l'exemple illustré, les semelles 30 sont fixées sur l'âme 10. Les figures 5 et 6 montrent l'ensemble ainsi constitué au terme de l'étape d).

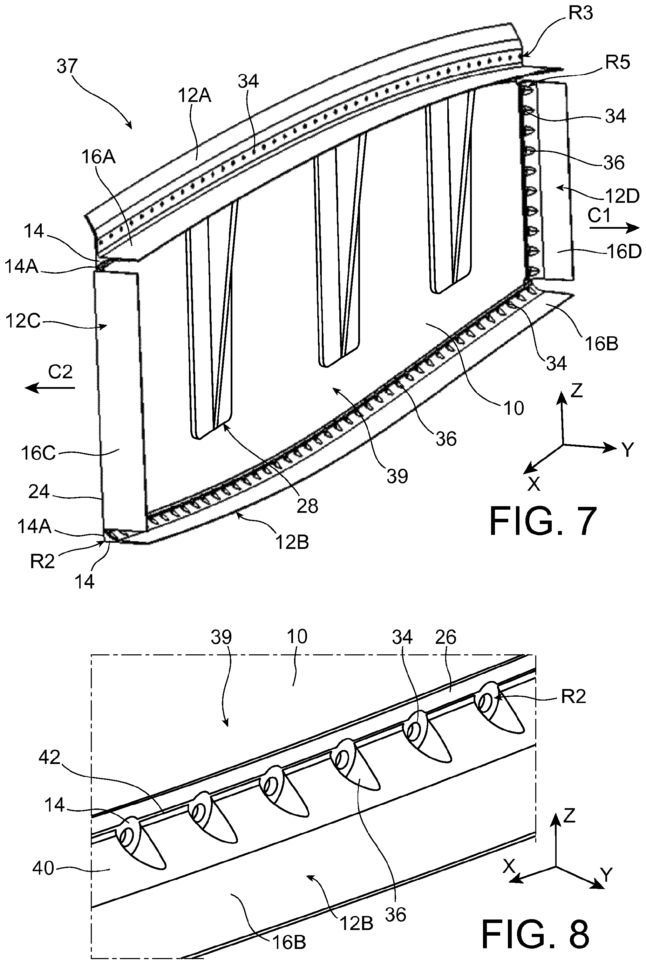

Dans le cas où les orifices précités n'ont pas été formés préalablement, l'étape A) comporte ensuite une étape e) consistant à percer ces orifices 34 au travers des embases 14 de chacun des éléments profilés 12 (figure 7), et, de préférence, à former des lamages 36 autour de tout ou partie des orifices des éléments profilés 12 (figures 7 et 8).

La nervure de jonction 37 obtenue au terme de l'étape A) est visible sur la figure 9.

Il est à noter que l'étape A) de fabrication de la nervure de jonction 37 peut être différente de la description qui précède. Les éléments profilés 12 peuvent par exemple être fixés à l'âme 10 par d'autres moyens, par exemple par des organes de fixation traversants. Dans d'autres modes de réalisation, les éléments profilés 12 et l'âme 10 peuvent être réalisés d'un seul tenant, par exemple par moulage.

Indépendamment de son mode de fabrication, la nervure de jonction 37 comporte donc le voile principal 39, à partir duquel les ailettes 16A-16D s'étendent du premier côté C1, et qui définit la surface de jonction 24 du deuxième côté C2. Ce voile principal 39 correspond, dans le mode de réalisation préféré de l'invention décrit ci-dessus, à l'ensemble formé par l'âme 10 et par les embases 14 des éléments profilés 12.

Dans tous les cas, la voile principal 39 comporte, au terme de l'étape A), des rangées d'orifices 34 débouchant du deuxième côté C2 dans la surface de jonction, et du premier côté C1 (opposé à ladite surface), ces orifices 34 étant donc traversants.

Les rangées d'orifices 34 comprennent au moins une première rangée d'orifices R1 formée dans une partie supérieure du voile principal 39, le cas échéant dans l'embase 14 du profilé supérieur 12A, et une deuxième rangée d'orifices R2 formée dans une partie inférieure du voile principal 39, le cas échéant dans l'embase 14 du profilé inférieur 12B, comme cela apparaît sur la figure 9. Les rangées R1 et R2 s'étendent globalement d'un côté avant vers un côté arrière de la nervure de jonction, à proximité respectivement d'extrémités supérieure et inférieure du voile principal 39.

Le cas échéant, certains des orifices de la première rangée R1 sont alignés avec des orifices formés dans les semelles 30 respectives des pieds de cadres internes 28, comme cela apparaîtra plus clairement dans ce qui suit (figure 10).

Dans le mode de réalisation préféré de l'invention, les rangées d'orifices 34 comprennent en outre une troisième rangée d'orifices R3 s'étendent globalement du côté avant vers le côté arrière de la nervure de jonction et formée dans la partie supérieure du voile principal 39, le cas échéant dans l'embase 14 du profilé supérieur 12A (figure 9), de sorte que la première rangée d'orifices R1 et la troisième rangée d'orifices R3 sont agencées (et débouchent) respectivement de part et d'autre de l'ailette supérieure 16A. La première rangée R1 est ainsi située entre l'âme 10 et la troisième rangée R3 ou, de manière plus générale, entre la deuxième rangée R2 et la troisième rangée R3.

Les rangées d'orifices 34 comprennent également une quatrième rangée d'orifices R4 formée dans une partie avant du voile principal 39, le cas échéant dans l'embase 14 du profilé avant 12C, et une cinquième rangée d'orifices R5 formée dans une partie arrière du voile principal 39, le cas échéant dans l'embase 14 du profilé arrière 12D. Les rangées R4 et R5 s'étendent globalement d'un côté inférieur vers un côté supérieur de la nervure de jonction, à proximité respectivement d'extrémités avant et arrière du voile principal 39.

Les rangées R1, R2, R4 et R5 sont agencées chacune dans une partie de l'embase 14 correspondante par laquelle l'élément profilé 12 correspondant est fixé à l'âme 10. Dans le cas des profilés inférieur 12B, avant 12C et arrière 12D, la partie précitée correspond à l'intégralité de l'embase 14. Dans le cas du profilé supérieur 12A, la partie précitée est la partie 38 de l'embase 14 situé du côté de l'âme 10 par rapport à l'ailette supérieure 16A.

Le cas échéant, l'extension 14B s'étend du deuxième côté C2 à partir d'une extrémité supérieure de la partie supérieure du voile principal 39.

Dans le mode de réalisation préféré de l'invention, les ailettes 16A-16D sont raccordées aux embases 14 correspondantes par des congés 40 respectifs (figure 8) au travers desquels sont formés les lamages 36. Chacun des congés 40 présente une discontinuité de courbure 42 au niveau de son raccordement à l'embase 14 correspondante. Une telle discontinuité de courbure permet d'accroître le rayon de courbure du congé 40 sans accroître l'étendue de l'embase 14 dans la direction orthogonale à l'ailette 16A-16D correspondante. Les congés 40 présentent ainsi une épaisseur relativement importante, qui leur permet de jouer un rôle de raidissement au sein des éléments profilés 12.

Dans le mode de réalisation préféré de l'invention, les rangées R1, R2, R4 et R5 d'orifices sont pourvues de lamages 36, tandis que la rangée R3 en est dépourvue.

Dans tous les cas, il est à noter que la plupart - ou de préférence la totalité - des orifices 34 est à l'état libre, au terme de l'étape A) du procédé. Il faut comprendre par-là que, dans le cas où certains des orifices 34 sont alignés avec des orifices formés dans les semelles 30 respectives des pieds de cadres internes 28, lesdits orifices 34 peuvent être traversés par des organes de fixation provisoire assurant la fixation des semelles 30 sur le voile principal 39. Les autres orifices 34 sont néanmoins à l'état libre, c'est-à-dire inoccupés et donc aptes à recevoir ultérieurement des organes de fixation. Dans le cas où aucun des orifices 34 n'est utilisé pour la fixation des semelles 30 sur le voile principal 39, l'ensemble des orifices 34 est à l'état libre. Dans tous les cas, il est clair que les orifices 34 à l'état libre ne concourent pas à la fixation des éléments profilés 12 sur l'âme 10, ou plus généralement à l'assemblage mutuel d'éléments constituant la nervure de jonction 37.

En référence aux figures 10, 11 et 20, l'étape i) comporte ensuite :
- une étape B) consistant à mettre à disposition une deuxième ferrure en équerre 44, dite ferrure externe supérieure, comprenant une semelle 46 et un talon 48 respectifs,
- une étape C) consistant à mettre à disposition une éclisse 50, et
- une étape D) consistant à mettre à disposition un caisson central de voilure 52, comportant au moins un panneau supérieur 54A, un panneau inférieur 54B, un longeron avant 54C reliant une extrémité avant du panneau supérieur à une extrémité avant du panneau inférieur, et un longeron arrière 54D reliant une extrémité arrière du panneau supérieur à une extrémité arrière du panneau inférieur.

Les panneaux supérieur 54A et inférieur 54B et les longerons avant 54C et arrière 54D délimitent ainsi un espace interne 55 du caisson central de voilure, ouvert au niveau des extrémités latérales 56 du caisson central de voilure 52 (l'une seulement des extrémités latérales 56 étant visible sur les figures 9-18).

Les panneaux supérieur 54A et inférieur 54B sont pourvus, sur leurs faces internes respectives, de raidisseurs 53, d'une manière bien connue.

Le talon 48 de la ferrure externe supérieure 44 comporte des orifices 58 (figures 10-11) agencés pour pouvoir être respectivement alignés avec tout ou partie des orifices 34 de la troisième rangée R3.

L'éclisse 50 comporte de préférence une partie proximale 50A et une partie distale 50B inclinées l'une par rapport à l'autre, de sorte qu'en section transversale, la face supérieure de la partie distale 50B forme un angle θ par rapport à la face supérieure de la partie proximale 50A, cette dernière face supérieure s'étendant typiquement parallèlement aux directions X et Y. L'angle θ est bien entendu compris entre 90 degrés et 180 degrés exclus, et est de préférence supérieur à 135 degrés.

Dans le mode de réalisation préféré de l'invention, la ferrure externe supérieure 44 et l'éclisse 50 sont des éléments réalisés chacun d'un seul tenant, de préférence par extrusion, à l'instar des éléments profilés 12.

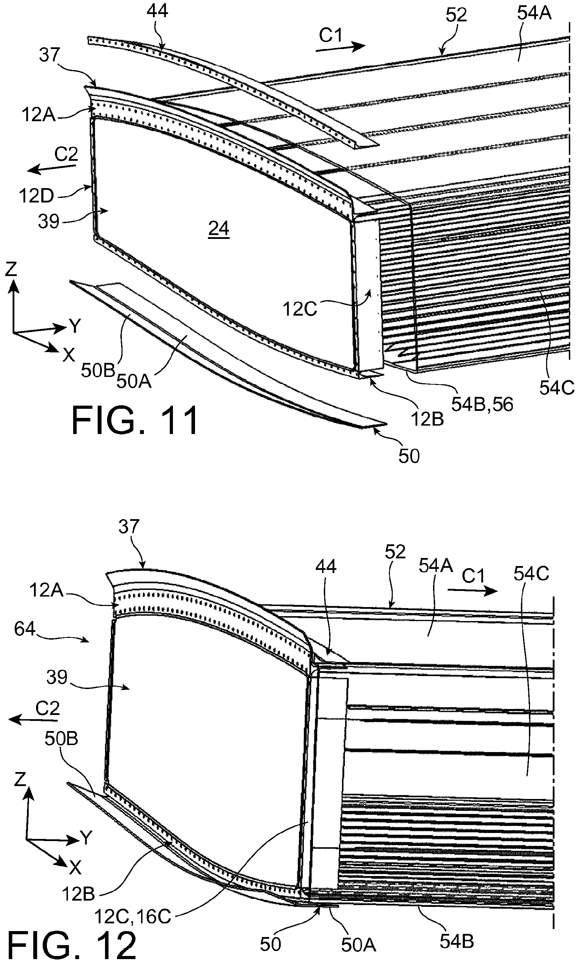

En référence aux figures 12 à 14 et 20, l'étape i) comporte ensuite :
- une étape E) consistant à disposer la nervure de jonction 37 à une extrémité latérale 56 du caisson central de voilure (visible sur la figure 11), en insérant les ailettes 16A-16D dans l'espace interne du caisson central de voilure 52, de sorte que l'ailette supérieure 16A soit en regard, et sensiblement au contact, du panneau supérieur 54A et que l'ailette inférieure 16B soit en regard, et sensiblement au contact, du panneau inférieur 54B, puis
- une étape F) consistant notamment à fixer conjointement l'ailette supérieure 16A et la semelle 46 de la ferrure externe supérieure 44 au panneau supérieur 54A au moyen de premiers organes de fixation traversants 60 (visibles sur la figure 10), et fixer conjointement l'ailette inférieure 16B et la partie proximale 50A de l'éclisse 50 au panneau inférieur 54B au moyen de deuxièmes organes de fixation traversants 62 (figure 10), de sorte que la partie distale 50B de l'éclisse 50 s'étende au-delà de la surface de jonction 24, dans une direction d'éloignement par rapport au caisson central de voilure 52, qui correspond à la direction allant du premier côté C1 vers le deuxième côté C2.

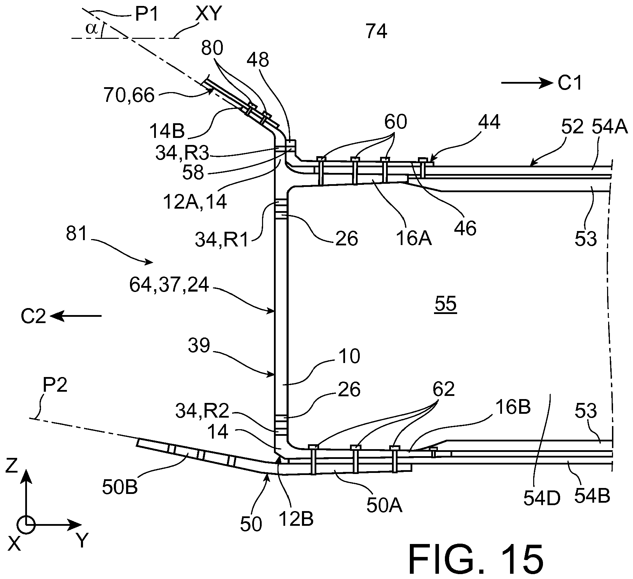

La ferrure externe supérieure 44 est positionnée de sorte que les orifices 58 de son talon 48 soient alignés avec les orifices de la troisième rangée d'orifices R3 du profilé supérieur 12A (comme cela apparaît sur la figure 15).

L'étape F) consiste également à fixer les ailettes 16C, 16D respectives des profilés avant 12C et arrière 12D aux longerons avant 54C et arrière 54D respectivement.

Les figures 12 à 14 illustrent le module central de voilure 64, obtenu à l'issu de l'étape i), et formé du caisson central de voilure 52 et de la nervure de jonction 37 assemblés l'un à l'autre de la manière décrite ci-dessus. Pour des raisons de clarté, les organes de fixation 60 et 62 ne sont pas visibles sur ces figures.

En référence aux figures 15, 16 et 20, l'étape I) comporte ensuite une étape ii) consistant de manière générale à mettre à disposition une structure de fuselage 66 (visible partiellement sur les figures 15, 16 et 19), et une étape iii) consistant de manière générale à fixer la ferrure externe supérieure 44 à la structure de fuselage 66.

Plus précisément, la structure de fuselage 66 comporte typiquement des cadres circonférentiels et une peau 70 fixée sur les cadres circonférentiels 68. Les cadres circonférentiels 68 intègrent (d'un seul tenant ou par assemblage) des troisièmes ferrures en équerre respectives 72, dites pieds de cadres externes, comprenant chacune une semelle 74 et un talon 76 respectifs, ainsi qu'un voile de raidissement 77 respectif.

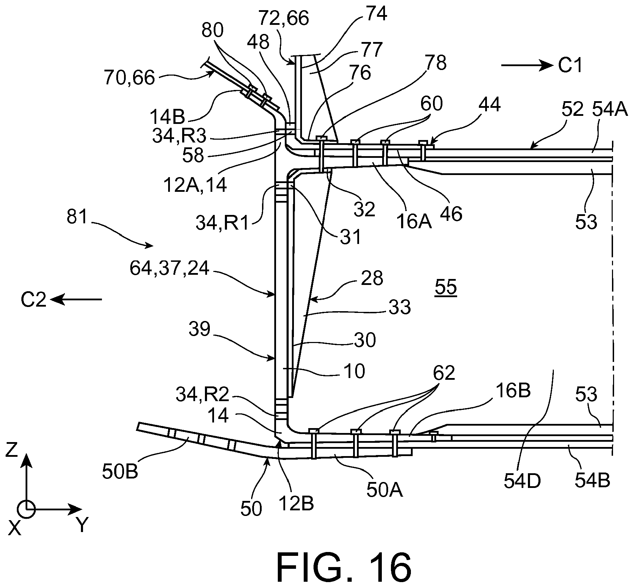

Dans ce cas, l'étape iii) comporte la fixation des talons 76 respectifs des pieds de cadres externes 72 respectivement aux talons 32 respectifs des pieds de cadres internes 28 au moyen de troisièmes organes de fixation traversants 78 (figure 16). Ces organes 78 traversent conjointement les talons 32 et 76, la semelle 46 de la ferrure externe supérieure 44, et le panneau supérieur 54A du caisson central de voilure 52.

L'étape iii) comporte en outre la fixation de la peau 70 sur l'extension 14B de la nervure de jonction 37 au moyen de quatrièmes organes de fixation traversants 80 (figures 15 et 16).

Les figures 15 et 16 montrent ainsi une partie du tronçon de fuselage 81 obtenu à l'issu de l'étape I).

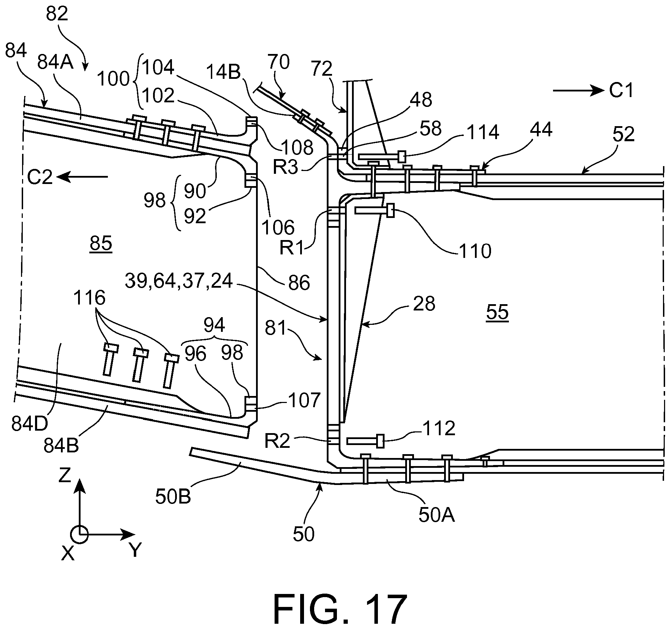

En référence aux figures 17 et 20, le procédé de fabrication de l'aéronef comporte ensuite une étape II) consistant à mettre à disposition au moins une aile 82 comportant un caisson latéral de voilure 84 délimitant un espace interne 85, et une étape III) consistant à positionner une extrémité 86 du caisson latéral de voilure 84 en regard de la surface de jonction 24 de la nervure de jonction 37, de sorte que la partie distale 50B de l'éclisse 50 soit positionnée à l'extérieur de l'espace interne 85 du caisson latéral de voilure 84.

Le caisson latéral de voilure 84 comporte un panneau supérieur 84A et un panneau inférieur 84B, ainsi qu'un longeron avant (non visible) et un longeron arrière 84D reliant chacun le panneau supérieur 84A au panneau inférieur 84B, d'une manière bien connue.

De plus, le caisson latéral de voilure 84 comporte une quatrième ferrure en équerre 88 comprenant une semelle 90 et un talon 92 respectifs, une cinquième ferrure en équerre 94 comprenant une semelle 96 et un talon 98 respectifs, et une sixième ferrure en équerre 100 comprenant une semelle 102 et un talon 104 respectifs.

La semelle 90 de la quatrième ferrure en équerre 88 est fixée sur le panneau supérieur 84A, à l'intérieur de l'espace interne 85 du caisson latéral de voilure, tandis que la semelle 102 de la sixième ferrure en équerre 100 est fixée sur le panneau supérieur 84A à l'extérieur de l'espace interne 85 du caisson latéral de voilure. Dans l'exemple illustré, les semelles 90 et 102 sont fixées au panneau supérieur 84A de manière conjointe, c'est-à-dire au moyen d'organes de fixation communs.

De plus, la semelle 96 de la cinquième ferrure en équerre 94 est fixée sur le panneau inférieur 84B à l'intérieur de l'espace interne 85 du caisson latéral de voilure.

Les talons respectifs 92, 98 et 104 des ferrures 88, 94 et 100 comportent des orifices respectifs 106, 107 et 108 agencés respectivement pour pouvoir être alignés avec les orifices 34 des rangées R1, R2 et R3, comme cela apparaîtra plus clairement dans ce qui suit.

Au terme de l'étape III), l'extrémité 86 du caisson latéral de voilure se trouve sensiblement au contact de la surface de jonction 24.

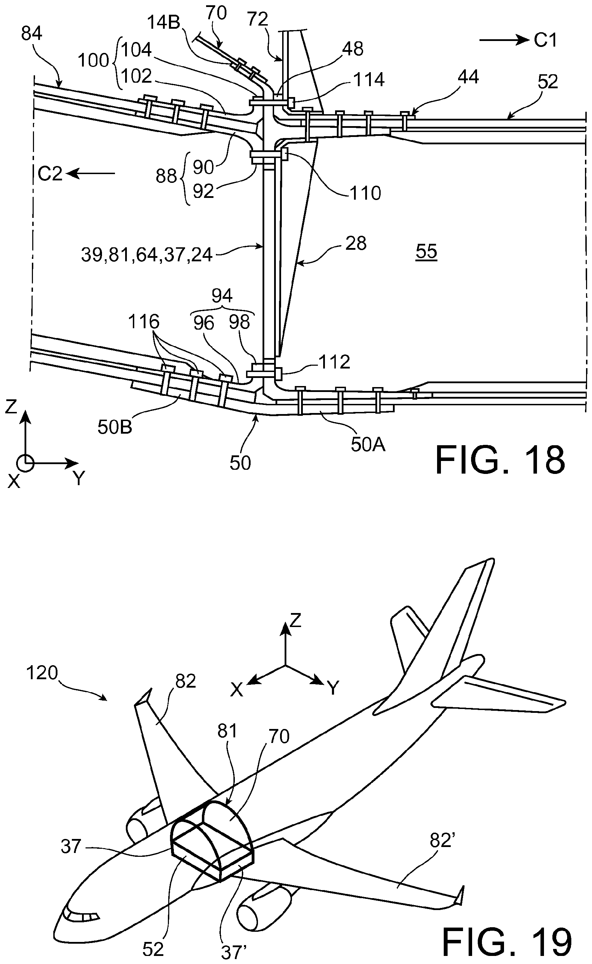

En référence aux figures 18 et 20, le procédé de fabrication de l'aéronef comporte ensuite une étape IV) consistant à fixer le caisson latéral de voilure 84 à la nervure de jonction 37 au moyen d'organes de fixation travaillant en traction/compression 110, 112, 114 engagés respectivement dans les orifices 34 formés dans le voile principal 39, et à fixer également le caisson latéral de voilure 84 à la partie distale 50B de l'éclisse 50 au moyen de cinquièmes organes de fixation traversants 116. Les organes de fixation travaillant en traction/compression 110, 112, 114 et les cinquièmes organes de fixation traversants 116 sont également visibles, à l'état non monté, sur la figure 17.

Dans le mode de réalisation préféré de l'invention, les organes de fixation travaillant en traction/compression comprennent des sixièmes organes de fixation traversants 110 montés conjointement au travers des orifices 106 (figure 17) formés dans le talon 92 de la quatrième ferrure en équerre 88 et au travers des orifices 34 de la première rangée d'orifices R1.

De plus, les organes de fixation travaillant en traction/compression comprennent des septièmes organes de fixation traversants 112 montés conjointement au travers des orifices 107 (figure 17) formés dans le talon 98 de la cinquième ferrure en équerre 94 et au travers des orifices 34 de la deuxième rangée d'orifices R2.

Enfin, les organes de fixation travaillant en traction/compression comprennent des huitièmes organes de fixation traversants 114 montés conjointement au travers des orifices 108 formés dans le talon 104 de la sixième ferrure en équerre 100, au travers des orifices 34 de la troisième rangée d'orifices R3, et au travers des orifices 58 du talon 48 de la ferrure externe supérieure 44.

De manière préférentielle, les organes de fixation travaillant en traction/compression 110, 112, 114 sont des boulons. Les organes de fixation 60, 62, 78, 80 et 116 sont de préférence également des boulons. L'homme du métier comprendra que du fait de leur agencement, les organes de fixation 60, 62, 80 et 116 travaillent principalement en cisaillement.

L'amenée de l'aile 82 au contact de la surface de jonction 24 est rendu possible par le fait que, dans tout plan de section transversale du module central de voilure 81, l'extension 14B de la nervure de jonction 37 présente une face inférieure (c'est-à-dire agencée du côté de l'aile 82) qui forme, avec un plan horizontal XY parallèle aux directions X et Y, un angle α supérieur à l'angle θ que fait la face supérieure de la partie distale 50B de l'éclisse 50 par rapport au plan XY (figure 15). Autrement dit, le plan P1 de la face inférieure de l'extension 14B et le plan P2 de la face supérieure de la partie distale 50B présentent une intersection située du premier côté C1 par rapport à la surface de jonction 24.

La figure 19 illustre très schématiquement un exemple d'aéronef 120 obtenu à l'issu du procédé selon l'invention.

Bien que le procédé, dans sa définition la plus générale, concerne un seul côté de l'aéronef (c'est-à-dire une aile 82, une nervure de jonction 37 et une extrémité latérale 56 correspondante du caisson central de voilure 52), le procédé est bien entendu prévu pour être mis en œuvre de manière analogue en ce qui concerne le côté opposé de l'aéronef pour la fixation d'une seconde aile 82' au tronçon de fuselage 81 par l'intermédiaire d'une seconde nervure de jonction 37' agencée à l'autre extrémité latérale du caisson central de voilure.

L'invention présente de nombreux avantages.

Premièrement, la nervure de jonction 37 peut être fabriquée à un stade amont d'assemblage de l'aéronef, en parallèle à des opérations de fabrication du caisson central de voilure 52.

La configuration de la nervure de jonction 37 permet en effet son assemblage au caisson central de voilure 52 après que ce dernier a été assemblé.

Le cas échéant, l'assemblage des différents éléments profilés 12 à l'âme 10 par soudage FSW permet un gain de temps et de masse et s'avère plus simple à mettre en œuvre qu'un assemblage par boulonnage ou rivetage.

Le procédé permet en outre d'intégrer un maximum d'éléments au module central de voilure, et donc à un stade amont d'assemblage de l'aéronef, y compris la ferrure externe supérieure 44, les pieds de cadres internes 28 et l'éclisse 50.

Le pré-perçage des orifices 34 permet également d'éviter d'avoir à conduire ces opérations à un stade d'assemblage final de l'aéronef.

L'utilisation d'organes de fixation travaillant en traction/compression 110, 112, 114, en combinaison avec la configuration générale de la nervure de jonction 37, permet de réduire au mieux le nombre et la complexité des opérations au stade d'assemblage final de l'aéronef.

Il est à noter que la ferrure externe supérieure 44 peut, en variante, être remplacée par une pluralité de ferrures configurées pour être juxtaposées le long de l'embase 14 du profilé supérieur 14A, avec ou sans espacement entre ces ferrures. Il en est de même en ce qui concerne les ferrures en équerre 88, 94, 100 du caisson latéral de voilure 84.

Dans tous les cas, la troisième rangée d'orifices R3 permet que le voile principal 39 reprenne directement les efforts de traction/compression appliqués à la nervure de jonction 37 par le caisson latéral de voilure 84.

## Revendications

1. Nervure de jonction (37) destinée à la jonction voilure-caisson central de voilure d'un aéronef, comprenant un voile principal (39), ainsi qu'une ailette supérieure (16A) et une ailette inférieure (16B) qui s'étendent à partir du voile principal (39), d'un premier côté (C1) par rapport au voile principal (39), dans laquelle le voile principal (39) présente une surface de jonction (24) agencée d'un deuxième côté (C2) opposé au premier côté, le voile principal (39) comportant des rangées d'orifices (34) débouchant du deuxième côté (C2) dans la surface de jonction et du premier côté (C1) et comprenant chacune des orifices à l'état libre, les rangées d'orifices comprenant au moins une première rangée d'orifices (R1) formée dans une partie supérieure du voile principal (39) et s'étendant d'un côté avant vers un côté arrière de la nervure de jonction, et une deuxième rangée d'orifices (R2) formée dans une partie inférieure du voile principal (39) et s'étendant du côté avant vers le côté arrière de la nervure de jonction, les rangées d'orifices (34) comprenant une troisième rangée d'orifices (R3) formée dans la partie supérieure du voile principal (39) et s'étendant du côté avant vers le côté arrière de la nervure de jonction, de sorte que les première et troisième rangées d'orifices (R1, R3) sont agencées respectivement de part et d'autre de l'ailette supérieure (16A).

2. Nervure de jonction selon la revendication 1, comportant une extension (14B) qui est inclinée par rapport à la surface de jonction (24) et qui s'étend du deuxième côté (C2) à partir d'une extrémité supérieure de la partie supérieure du voile principal (39), de manière à former un angle obtus avec l'ailette supérieure (16A) en section transversale.

3. Nervure de jonction selon l'une quelconque des revendications 1 à 2, comprenant en outre une ailette avant (16C) et une ailette arrière (16D) qui s'étendent à partir du voile principal (39), du premier côté (C1) par rapport au voile principal (39), et dans laquelle les rangées d'orifices (34) comprennent en outre une quatrième rangée d'orifices (R4) formée dans une partie avant du voile principal (39) et s'étendant d'un côté inférieur vers un côté supérieur de la nervure de jonction, et une cinquième rangée d'orifices (R5) formée dans une partie arrière du voile principal (39) et s'étendant du côté inférieur vers le côté supérieur de la nervure de jonction.

4. Procédé de fabrication d'une nervure de jonction (37) selon l'une quelconque des revendications 1 à 3, comprenant au moins les étapes suivantes :
a) mettre à disposition une âme (10), et des éléments profilés (12) comprenant chacun une embase (14) respective et une ailette (16A-16D) respective s'étendant en saillie à partir de l'embase ; puis
b) fixer les embases (14) respectives des éléments profilés (12) à l'âme (10), de sorte que les ailettes (16A-16D) respectives des éléments profilés s'étendent d'un premier côté par rapport à l'âme, correspondant audit premier côté (C1), les embases (14) respectives des éléments profilés et l'âme (10) formant ensemble ledit voile principal (39) ;
et dans lequel, au terme du procédé, le voile principal (39) comporte les rangées d'orifices (34) comprenant au moins ladite première rangée d'orifices (R1), formée dans l'embase (14) d'un premier des éléments profilés, dit profilé supérieur (12A), et ladite deuxième rangée d'orifices (R2), formée dans l'embase (14) d'un deuxième des éléments profilés, dit profilé inférieur (12B), les profilés supérieur et inférieur étant agencés à deux extrémités opposées de l'âme, dites extrémité supérieure (10A) et extrémité inférieure (10B), de sorte que l'embase (14) du profilé supérieur (12A) forme ladite partie supérieure du voile principal (39) et que l'ailette du profilé supérieur (12A) forme ladite ailette supérieure (16A), et de sorte que l'embase (14) du profilé inférieur (12B) forme ladite partie inférieure du voile principal (39) et que l'ailette du profilé inférieur (12B) forme ladite ailette inférieure (16B), l'embase (14) du profilé supérieur (12A) s'étendant de part et d'autre de l'ailette (16A) du profilé supérieur et comprenant la troisième rangée d'orifices (R3), et chacune des rangées d'orifices (34) comprenant des orifices à l'état libre.

5. Procédé selon la revendication 4, dans lequel chacun des éléments profilés (12B, 12C, 12D) autres que le profilé supérieur (12A) présente une configuration en équerre.

6. Procédé selon l'une quelconque des revendications 4 à 5, comprenant en outre les étapes suivantes :
c) mettre à disposition des premières ferrures en équerre, dites pieds de cadres internes (28), comprenant chacune une semelle (30) et un talon (32) respectifs ; puis
d) après l'étape b), fixer les semelles (30) respectives des pieds de cadres internes (28) sur le voile principal (39).

7. Procédé selon l'une quelconque des revendications 4 à 6 de fabrication d'une nervure de jonction (37) selon la revendication 3, dans lequel les rangées d'orifices (34) comprennent en outre la quatrième rangée d'orifices (R4), formée dans un troisième des éléments profilés, dit profilé avant (12C), et la cinquième rangée d'orifices (R5), formée dans un quatrième des éléments profilés, dit profilé arrière (12D), les profilés avant et arrière étant agencés à deux extrémités opposées de l'âme (10), dites extrémité avant (10C) et extrémité arrière (10D) respectivement, qui relient chacune l'extrémité supérieure (10A) à l'extrémité inférieure (10B) de l'âme, de sorte que l'embase (14) du profilé avant (12C) forme ladite partie avant du voile principal (39) et que l'ailette (16C) du profilé avant forme ladite ailette avant (12C), et de sorte que l'embase (14) du profilé arrière (12D) forme ladite partie arrière du voile principal (39) et que l'ailette du profilé arrière (12D) forme ladite ailette arrière (16D).

8. Procédé de fabrication d'un module central de voilure (64) pour aéronef, comprenant les étapes suivantes :
A) fabriquer au moins une nervure de jonction (37) selon l'une quelconque des revendications 1 à 3, éventuellement au moyen du procédé selon l'une quelconque des revendications 4 à 7 ;
B) mettre à disposition au moins une deuxième ferrure en équerre, dite ferrure externe supérieure (44), comprenant une semelle (46) et un talon (48) ;
C) mettre à disposition au moins une éclisse (50) ;
D) mettre à disposition un caisson central de voilure (52), comportant au moins un panneau supérieur (54A), un panneau inférieur (54B), un longeron avant (54C) reliant une extrémité avant du panneau supérieur à une extrémité avant du panneau inférieur, et un longeron arrière (54D) reliant une extrémité arrière du panneau supérieur à une extrémité arrière du panneau inférieur, de sorte que les panneaux supérieur et inférieur et les longerons avant et arrière délimitent un espace interne (55) du caisson central de voilure (52) ouvert en au moins une extrémité latérale (56) du caisson central de voilure ; puis
E) disposer la nervure de jonction (37) à ladite extrémité latérale (56) du caisson central de voilure, en insérant les ailettes (16A-16D) dans l'espace interne (55) du caisson central de voilure, de sorte que l'ailette supérieure (16A) soit en regard du panneau supérieur (54A) et que l'ailette inférieure (16B) soit en regard du panneau inférieur (54B) ; puis
F) fixer conjointement l'ailette supérieure (16A) et la semelle (46) de ladite au moins une ferrure externe supérieure (44) au panneau supérieur (54A) au moyen de premiers organes de fixation traversants (60), et fixer conjointement l'ailette inférieure (16B) et une partie proximale (50A) de ladite au moins une éclisse (50) au panneau inférieur (54B) au moyen de deuxièmes organes de fixation traversants (62), de sorte qu'une partie distale (50B) de ladite au moins une éclisse (50) s'étende au-delà de la surface de jonction (24) dans une direction d'éloignement par rapport au caisson central de voilure (52).

9. Procédé selon la revendication 8, dans lequel la nervure de jonction (37) est conforme à la revendication 3, ou dans lequel l'étape A) consiste à fabriquer la nervure de jonction (37) selon le procédé de la revendication 7, et dans lequel l'étape F) comporte en outre la fixation des ailettes avant (16C) et arrière (16D) respectivement aux longerons avant (54C) et arrière (54D).

10. Procédé selon la revendication 8 ou 9, dans lequel la partie distale (50B) de ladite au moins une éclisse (50) forme, en section transversale, un angle (θ) par rapport à la partie proximale (50A) de ladite au moins une éclisse.

11. Procédé selon l'une quelconque des revendications 8 à 10, dans lequel la nervure de jonction (37) est conforme à la revendication 2 ou dans lequel l'étape A) consiste à fabriquer la nervure de jonction (37) selon le procédé de la revendication 6, et dans lequel le talon (48) de ladite au moins une ferrure externe supérieure (44) comporte des orifices (58) respectivement alignés avec les orifices (34) de la troisième rangée d'orifices (R3).

12. Procédé de fabrication d'un tronçon de fuselage (81) pour aéronef, comprenant les étapes suivantes :
i) fabriquer un module central de voilure (64) pour aéronef selon le procédé de l'une quelconque des revendications 8 à 11 ;
ii) mettre à disposition une structure de fuselage (66) ;
iii) fixer ladite au moins une ferrure externe supérieure (44) à la structure de fuselage (66).

13. Procédé selon la revendication 12, dans lequel :
- l'étape A) de l'étape i) consiste à fabriquer la nervure de jonction (37) selon le procédé de la revendication 6 ;
- la structure de fuselage (66) comporte des cadres circonférentiels pourvus de troisièmes ferrures en équerre respectives, dites pieds de cadres externes (72), comprenant chacune une semelle (74) et un talon (76) respectifs ; et
- l'étape iii) comporte la fixation des talons (76) respectifs des pieds de cadres externes (72) respectivement aux talons (32) respectifs des pieds de cadres internes (28) au moyen de troisièmes organes de fixation traversants (78).

14. Procédé selon la revendication 12 ou 13, dans lequel :
- la nervure de jonction (37) est conforme à la revendication 2 ;
- la structure de fuselage (66) comporte une peau (70) ; et
- l'étape iii) comporte la fixation de la peau (70) sur l'extension (14B) au moyen de quatrièmes organes de fixation traversants (80).

15. Procédé de fabrication d'un aéronef (120), comprenant les étapes consistant à :
I) fabriquer un tronçon de fuselage (81) selon le procédé de l'une quelconque des revendications 12 à 14 ;
II) mettre à disposition au moins une aile (82) comportant un caisson latéral de voilure (84) délimitant un espace interne (85) ; puis
III) positionner une extrémité (86) du caisson latéral de voilure (84) en regard de la surface de jonction (24), de sorte que la partie distale (50B) de ladite au moins une éclisse (50) soit positionnée à l'extérieur de l'espace interne (85) du caisson latéral de voilure ; puis
IV) fixer le caisson latéral de voilure (84) à la nervure de jonction (37) au moyen d'organes de fixation travaillant en traction/compression (110, 112, 114) engagés respectivement dans les orifices (34) desdites rangées d'orifices, et fixer le caisson latéral de voilure (84) à la partie distale (50B) de ladite au moins une éclisse (50) au moyen de cinquièmes organes de fixation traversants (116).

16. Procédé selon la revendication 15, dans lequel :
- le caisson latéral de voilure (84) comporte un panneau supérieur (84A) et un panneau inférieur (84B), ainsi qu'au moins une quatrième ferrure en équerre (88) et au moins une cinquième ferrure en équerre (94) ;
- lesdites au moins une quatrième et cinquième ferrures en équerre comprennent chacune une semelle et un talon respectifs ;
- la semelle (90) de ladite au moins une quatrième ferrure en équerre (88) est fixée sur le panneau supérieur (84A) du caisson latéral de voilure, à l'intérieur de l'espace interne (85) du caisson latéral de voilure ;
- la semelle (96) de ladite au moins une cinquième ferrure en équerre (94) est fixée sur le panneau inférieur (84B) du caisson latéral de voilure, à l'intérieur de l'espace interne (85) du caisson latéral de voilure ;
- lesdits organes de fixation travaillant en traction/compression comprennent des sixièmes organes de fixation traversants (110) montés conjointement au travers d'orifices (106) formés dans le talon (92) de ladite au moins une quatrième ferrure en équerre (88) et des orifices (34) de la première rangée d'orifices (R1) ; et
- lesdits organes de fixation travaillant en traction/compression comprennent des septièmes organes de fixation traversants (112) montés conjointement au travers d'orifices (107) formés dans le talon (98) de ladite au moins une cinquième ferrure en équerre (94) et des orifices (34) de la deuxième rangée d'orifices (R2).

17. Procédé selon la revendication 16, dans lequel :
- l'étape i) de l'étape I) consiste à fabriquer le module central de voilure (64) selon le procédé de la revendication 11 ;
- le caisson latéral de voilure (84) comporte au moins une sixième ferrure en équerre (100) comprenant une semelle et un talon ;
- la semelle (102) de ladite au moins une sixième ferrure en équerre (100) est fixée sur le panneau supérieur (84A) à l'extérieur de l'espace interne (85) du caisson latéral de voilure ; et
- lesdits organes de fixation travaillant en traction/compression comprennent des huitièmes organes de fixation traversants (114) montés conjointement au travers d'orifices (108) formés dans le talon (104) de ladite au moins une sixième ferrure en équerre (100), des orifices (34) de la troisième rangée d'orifices (R3), et des orifices (58) du talon (48) de ladite au moins une ferrure externe supérieure (44).

## Patentansprüche

1. Wurzelrippe (37) zur Verbindung eines Tragflügels mit einem mittlerem Flügelkasten eines Luftfahrzeugs, umfassend eine Hauptbahn (39) sowie eine obere Lamelle (16A) und eine untere Lamelle (16B), die sich von der Hauptbahn (39) auf einer ersten Seite (C1) relativ zur Hauptbahn (39) erstrecken, wobei die Hauptbahn (39) eine Verbindungsfläche (24) aufweist, die auf einer der ersten Seite gegenüberliegenden zweiten Seite (C2) angeordnet ist, wobei die Hauptbahn (39) Reihen von Öffnungen (34) aufweist, die auf der zweiten Seite (C2) in der Verbindungsfläche und auf der ersten Seite (C1) münden und jeweils Öffnungen im freien Zustand umfassen, wobei die Reihen von Öffnungen zumindest eine erste Öffnungsreihe (R1), die in einem oberen Teil der Hauptbahn (39) ausgebildet ist und sich von einer vorderen Seite zu einer hinteren Seite der Wurzelrippe erstreckt, und eine zweite Öffnungsreihe (R2), die in einem unteren Teil der Hauptbahn (39) ausgebildet ist und sich von der vorderen Seite zur hinteren Seite der Wurzelrippe erstreckt, aufweisen, wobei die Reihen von Öffnungen (34) eine dritte Öffnungsreihe (R3) aufweisen, die im oberen Teil der Hauptbahn (39) ausgebildet ist und sich von der vorderen Seite zur hinteren Seite der Wurzelrippe erstreckt, so dass die erste und die dritte Reihe von Öffnungen (R1, R3) jeweils beidseits der oberen Lamellen (16A) angeordnet sind.

2. Wurzelrippe nach Anspruch 1, mit einer Erweiterung (14B), die relativ zur Verbindungsfläche (24) geneigt ist und sich auf der zweiten Seite (C2) von einem oberen Ende des oberen Teils der Hauptbahn (39) so erstreckt, dass sie im Querschnitt mit der oberen Lamelle (16A) einen stumpfen Winkel bildet.

3. Wurzelrippe nach einem der Ansprüche 1 bis 2, umfassend ferner eine vordere Lamelle (16C) und eine hintere Lamelle (16D), die sich von der Hauptbahn (39) auf der ersten Seite (C1) relativ zur Hauptbahn (39) erstrecken, und wobei die Reihen von Öffnungen (34) ferner eine vierte Öffnungsreihe (R4), die in einem vorderen Teil der Hauptbahn (39) ausgebildet ist und sich von einer unteren Seite zu einer oberen Seite der Wurzelrippe erstreckt, und eine fünfte Öffnungsreihe (R5), die in einem hinteren Teil der Hauptbahn (39) ausgebildet ist und sich von der unteren Seite zur oberen Seite der Wurzelrippe erstreckt, umfassen.

4. Verfahren zur Herstellung einer Wurzelrippe (37) nach einem der Ansprüche 1 bis 3, umfassend zumindest die folgenden Schritte:
a) Bereitstellen von einem Kern (10) und von Profilelementen (12), die jeweils eine entsprechende Basis (14) und eine entsprechende, von der Basis hervorstehende Lamelle (16A - 16D) umfassen; dann
b) Befestigen der jeweiligen Basen (14) der Profilelemente (12) am Kern (10), sodass sich die jeweiligen Lamellen (16A - 16D) der Profilelemente auf einer ersten Seite relativ zum Kern, die der ersten Seite (C1) entspricht, erstrecken, wobei die jeweiligen Basen (14) der Profilelemente und der Kern (10) zusammen die Hauptbahn (39) ausbilden;
und wobei am Ende des Verfahrens die Hauptbahn (39) die Reihen von Öffnungen (34) aufweist, die zumindest die erste Öffnungsreihe (R1), die in der Basis (14) eines ersten der Profilelemente, das als oberes Profilelement (12A) bezeichnet wird, ausgebildet ist, und die zweite Öffnungsreihe (R2), die in der Basis (14) eines zweiten der Profilelemente, das als unteres Profilelement (12B) bezeichnet wird, ausgebildet ist, umfassen, wobei das obere und das untere Profilelement an zwei gegenüberliegenden Enden des Kerns, die als oberes Ende (10A) und unteres Ende (10B) bezeichnet werden, angeordnet sind, so dass die Basis (14) des oberen Profilelements (12A) den oberen Teil der Hauptbahn (39) ausbildet und die Lamelle des oberen Profilelements (12A) die obere Lamelle (16A) ausbildet und dass die Basis (14) des unteren Profilelements (12B) den unteren Teil der Hauptbahn (39) ausbildet und die Lamelle des unteren Profilelements (12B) die untere Lamelle (16B) ausbildet, wobei sich die Basis (14) des oberen Profilelements (12A) auf beiden Seiten der Lamelle (16A) des oberen Profilelements erstreckt und die dritte Öffnungsreihe (R3) umfasst und wobei jede der Reihen von Öffnungen (34) Öffnungen im freien Zustand umfasst.

5. Verfahren nach Anspruch 4, wobei jedes der Profilelemente (12B, 12C, 12D) mit Ausnahme des oberen Profilelements (12A) eine Winkelkonfiguration aufweist.

6. Verfahren nach einem der Ansprüche 4 bis 5, umfassend ferner die folgenden Schritte:
c) Bereitstellen von ersten Winkelbeschlägen, die als Innenrahmenfüße (28) bezeichnet werden und jeweils eine Sohle (30) und eine Ferse (32) umfassen; dann
d) nach Schritt b) Befestigen der jeweiligen Sohlen (30) der Innenrahmenfüße (28) an der Hauptbahn (39).

7. Verfahren nach einem der Ansprüche 4 bis 6 zur Herstellung einer Wurzelrippe (37) nach Anspruch 3, wobei die Reihen von Öffnungen (34) ferner die vierte Öffnungsreihe (R4), die in einem dritten der Profilelemente, das als vorderes Profilelement (12C) bezeichnet wird, ausgebildet ist, und die fünfte Öffnungsreihe (R5), die in einem vierten der Profilelemente, das als hinteres Profilelement (12D) bezeichnet wird, ausgebildet ist, umfassen, wobei das vordere und das hintere Profilelement an zwei gegenüberliegenden Enden des Kerns (10) angeordnet sind, die als vorderes Ende (10C) bzw. hinteres Ende (10D) bezeichnet werden und die jeweils das obere Ende (10A) mit dem unteren Ende (10B) des Kerns verbinden, so dass die Basis (14) des vorderen Profilelements (12C) den vorderen Teil der Hauptbahn (39) ausbildet und die Lamelle (16C) des vorderen Profilelements die vordere Lamelle (12C) ausbildet und dass die Basis (14) des hinteren Profilelements (12D) den hinteren Teil der Hauptbahn (39) ausbildet und die Lamelle des hinteren Profilelements (12D) die hintere Lamelle (16D) ausbildet.

8. Verfahren zur Herstellung eines mittleren Tragflügelmoduls (64) für ein Luftfahrzeug, umfassend die folgenden Schritte:
A) Herstellen zumindest einer Wurzelrippe (37) nach einem der Ansprüche 1 bis 3, gegebenenfalls gemäß dem Verfahren nach einem der Ansprüche 4 bis 7;
B) Bereitstellen von zumindest einem zweiten Winkelbeschlag, der als oberer Außenbeschlag (44) bezeichnet wird und eine Sohle (46) und eine Ferse (48) umfasst;
C) Bereitstellen von zumindest einer Schiene (50);
D) Bereitstellen von einem mittleren Flügelkasten (52), der zumindest eine obere Platte (54A), eine untere Platte (54B), einen vorderen Holm (54C), der ein vorderes Ende der oberen Platte mit einem vorderen Ende der unteren Platte verbindet, und einen hinteren Holm (54D), der ein hinteres Ende der oberen Platte mit einem hinteren Ende der unteren Platte verbindet, aufweist, so dass die obere und die untere Platte und der vordere und der hintere Holm einen Innenraum (55) des mittleren Flügelkastens (52) begrenzen, der an zumindest einem seitlichen Ende (56) des mittleren Flügelkastens offen ist; dann
E) Anordnen der Wurzelrippe (37) am seitlichen Ende (56) des mittleren Flügelkastens durch Einsetzen der Lamellen (16A - 16D) in den Innenraum (55) des mittleren Flügelkastens, so dass die obere Lamelle (16A) der oberen Platte (54A) zugewandt ist und die untere Lamelle (16B) der unteren Platte (54B) zugewandt ist; dann
F) gemeinsames Befestigen der oberen Lamellen (16A) und der Sohle (46) des zumindest einen oberen Außenbeschlags (44) an der oberen Platte (54A) mit Hilfe von ersten Durchgangsbefestigungselementen (60) und gemeinsames Befestigen der unteren Lamelle (16B) und eines proximalen Teils (50A) der zumindest einen Schiene (50) an der unteren Platte (54B) mit Hilfe von zweiten Durchgangsbefestigungselementen (62), so dass sich ein distaler Teil (50B) der zumindest einen Schiene (50) über die Verbindungsfläche (24) hinaus in einer Richtung weg vom mittleren Flügelkasten (52) erstreckt.

9. Verfahren nach Anspruch 8, wobei die Wurzelrippe (37) dem Anspruch 3 entspricht oder wobei Schritt A) darin besteht, die Wurzelrippe (37) gemäß dem Verfahren nach Anspruch 7 herzustellen, und wobei Schritt F) ferner die Befestigung der vorderen (16C) und der hinteren Lamelle (16D) am vorderen (54C) bzw. hinteren Holm (54D) umfasst.

10. Verfahren nach Anspruch 8 oder 9, wobei der distale Teil (50B) der zumindest einen Schiene (50) im Querschnitt einen Winkel (θ) relativ zum proximalen Teil (50A) der zumindest einen Schiene bildet.

11. Verfahren nach einem der Ansprüche 8 bis 10, wobei die Wurzelrippe (37) dem Anspruch 2 entspricht oder wobei Schritt A) darin besteht, die Wurzelrippe (37) gemäß dem Verfahren nach Anspruch 6 herzustellen, und wobei die Ferse (48) des zumindest einen oberen Außenbeschlags (44) Öffnungen (58) aufweist, die jeweils mit den Öffnungen (34) der dritten Öffnungsreihe (R3) ausgerichtet sind.

12. Verfahren zur Herstellung eines Rumpfabschnitts (81) für ein Luftfahrzeug, umfassend die folgenden Schritte:
i) Herstellen eines mittleren Tragflügelmoduls (64) für ein Luftfahrzeug gemäß dem Verfahren nach einem der Ansprüche 8 bis 11;
ii) Bereitstellen einer Rumpfstruktur (66);
iii) Befestigen des zumindest einen oberen Außenbeschlags (44) an der Rumpfstruktur (66).

13. Verfahren nach Anspruch 12, wobei:
- Schritt A) aus Schritt i) darin besteht, die Wurzelrippe (37) gemäß dem Verfahren nach Anspruch 6 herzustellen;
- die Rumpfstruktur (66) umlaufende Rahmen aufweist, die mit jeweiligen dritten Winkelbeschlägen versehen sind, die als Außenrahmenfüße (72) bezeichnet werden und jeweils eine Sohle (74) und eine Ferse (76) umfassen; und
- Schritt iii) die Befestigung der entsprechenden Fersen (76) der Außenrahmenfüße (72) jeweils an den entsprechenden Fersen (32) der Innenrahmenfüße (28) mit Hilfe von dritten Durchgangsbefestigungselementen (78) beinhaltet.

14. Verfahren nach Anspruch 12 oder 13, wobei:
- die Wurzelrippe (37) dem Anspruch 2 entspricht;
- die Rumpfstruktur (66) eine Haut (70) aufweist und
- Schritt iii) die Befestigung der Haut (70) an der Erweiterung (14B) mit Hilfe von vierten Durchgangsbefestigungselementen (80) beinhaltet.

15. Verfahren zur Herstellung eines Luftfahrzeugs (120), umfassend die folgenden Schritte:
I) Herstellen eines Rumpfabschnitts (81) gemäß dem Verfahren nach einem der Ansprüche 12 bis 14;
II) Bereitstellen zumindest eines Flügels (82) mit einem seitlichen Flügelkasten (84), der einen Innenraum (85) begrenzt; dann
III) Positionieren eines Endes (86) des seitlichen Flügelkastens (84) gegenüber der Verbindungsfläche (24), so dass der distale Teil (50B) der zumindest einen Schiene (50) außerhalb des Innenraums (85) des seitlichen Flügelkastens positioniert ist; dann
IV) Befestigen des seitlichen Flügelkastens (84) an der Wurzelrippe (37) mit Hilfe von auf Zug/Druck arbeitenden Befestigungselementen (110, 112, 114), die jeweils in die Öffnungen (34) der Reihen von Öffnungen eingreifen, und Befestigen des seitlichen Flügelkastens (84) am distalen Teil (50B) der zumindest einen Schiene (50) mit Hilfe von fünften Durchgangsbefestigungselementen (116).

16. Verfahren nach Anspruch 15, wobei:
- der seitliche Flügelkasten (84) eine obere Platte (84A) und eine untere Platte (84B) sowie zumindest einen vierten Winkelbeschlag (88) und zumindest einen fünften Winkelbeschlag (94) aufweist;
- der zumindest eine vierte und der zumindest eine fünfte Winkelbeschlag jeweils eine Sohle und eine Ferse umfassen;
- die Sohle (90) des zumindest einen vierten Winkelbeschlags (88) an der oberen Platte (84A) des seitlichen Flügelkastens im Inneren des Innenraums (85) des seitlichen Flügelkastens befestigt ist;
- die Sohle (96) des zumindest einen fünften Winkelbeschlags (94) an der unteren Platte (84B) des seitlichen Flügelkastens im Inneren des Innenraums (85) des seitlichen Flügelkastens befestigt ist;
- die auf Zug/Druck arbeitenden Befestigungselemente sechste Durchgangsbefestigungselemente (110) umfassen, die gemeinsam durch die Öffnungen (106), die in der Ferse (92) des zumindest einen vierten Winkelbeschlags (88) ausgebildet sind, und Öffnungen (34) der ersten Öffnungsreihe (R1) montiert sind; und
- die auf Zug/Druck arbeitenden Befestigungselemente siebente Durchgangsbefestigungselemente (112) umfassen, die gemeinsam durch die Öffnungen (107), die in der Ferse (98) des zumindest einen fünften Winkelbeschlags (94) ausgebildet sind, und Öffnungen (34) der zweiten Öffnungsreihe (R2) montiert sind.

17. Verfahren nach Anspruch 16, wobei:
- Schritt i) aus Schritt I) darin besteht, das mittlere Tragflügelmodul (64) gemäß dem Verfahren nach Anspruch 11 herzustellen;
- der seitliche Flügelkasten (84) zumindest einen sechsten Winkelbeschlag (100) aufweist, der eine Sohle und eine Ferse umfasst;
- die Sohle (102) des zumindest einen sechsten Winkelbeschlags (100) an der oberen Platte (84A) außerhalb des Innenraums (85) des seitlichen Flügelkastens befestigt ist und
- die auf Zug/Druck arbeitenden Befestigungselemente achte Durchgangsbefestigungselemente (114) umfassen, die gemeinsam durch Öffnungen (108), die in der Ferse (104) des zumindest einen sechsten Winkelbeschlags (100) ausgebildet sind, Öffnungen (34) der dritten Öffnungsreihe (R3) und Öffnungen (58) der Ferse (48) des zumindest einen oberen Außenbeschlags (44) montiert sind.

## Claims

1. A junction rib (37) designed for the wing-central wingbox junction of an aircraft, comprising a main web (39) and an upper flange (16A) and a lower flange (16B) that extend from the main web (39) on a first side (C1) relative to the main web (39), wherein the main web (39) has a junction surface (24) arranged on a second side (C2) opposite the first side, the main web (39) including rows of orifices (34) opening on the second side (C2) in the junction surface and on the first side (C1) and each comprising orifices in a free state, the rows of orifices comprising at least a first row of orifices (R1) formed in an upper portion of the main web (39) and extending from a front side towards a rear side of the junction rib, a second row of orifices (R2) formed in a lower portion of the main web (39) and extending from the front side towards the rear side of the junction rib, the rows of orifices (34) including a third row of orifices (R3) formed in the upper portion of the main web (39) and extending from the front side towards the rear side of the junction rib such that the first and third rows of orifices (R1, R3) are arranged respectively on either side of the upper flange (16A).

2. The junction rib as claimed in claim 1, including an extension (14B) which is inclined relative to the junction surface (24) and which extends on the second side (C2), from an upper end of the upper portion of the main web (39), so as to form an obtuse angle with the upper flange (16A) in cross section.

3. The junction rib as claimed in either of claims 1 and 2, furthermore including a front flange (16C) and a rear flange (16D) that extend from the main web (39), on the first side (C1) relative to the main web (39), and wherein the rows of orifices (34) furthermore comprise a fourth row (R4) of orifices formed in a front portion of the main web (39) and extending from a lower side towards an upper side of the junction rib, and a fifth row (R5) of orifices formed in a rear portion of the main web (39) and extending from the lower side to the upper side of the junction rib.

4. A method for producing a rib junction (37) as claimed in any one of claims 1 to 3, comprising at least steps of:
a) providing a core (10), and profile elements (12) each comprising a respective base (14) and a respective flange (16A-16D) extending to protrude from the base; then
b) fastening the respective bases (14) of the profile elements (12) to the core (10), such that the respective flanges (16A-16D) of the profile elements extend on a first side relative to the core, corresponding to said first side (C1), the respective bases (14) of the profile elements and the core (10) together forming said main web (39);
and wherein, on completion of the method, the main web (39) includes the rows of orifices (34) comprising at least said first row of orifices (R1), formed in the base (14) of a first one of the profile elements, called upper profile (12A), and said second row of orifices (R2), formed in the base (14) of a second one of the profile elements, called lower profile (12B), the upper and lower profiles being arranged at two opposite ends of the core, called upper end (10A) and lower end (10B), such that the base (14) of the upper profile (12A) forms said upper portion of the main web (39) and such that the flange of the upper profile (12A) forms said upper flange (16A), and such that the base (14) of the lower profile (12B) forms said lower portion of the main web (39) and such that the flange of the lower profile (12B) forms said lower flange (16B), wherein the base (14) of the upper profile (12A) extends on either side of the flange (16A) of the upper profile and comprises the third row of orifices (R3), and wherein each row of orifices (34) comprises orifices in a free state.

5. The method as claimed in claim 4, wherein each of the profile elements (12B, 12C, 12D) other than the upper profile (12A) has an angled configuration

6. The method as claimed in either one of claims 4 and 5, furthermore comprising steps of:
c) providing first angle fittings, called inner frame supports (28), each comprising a respective base (30) and a shoulder (32); then
d) after the step b), fastening the respective bases (30) of the inner frame supports (28) to the main web (39).

7. The method as claimed in any one of claims 4 to 6 for producing a rib junction (37) as claimed in claim 3, wherein the rows of orifices (34) furthermore comprise the fourth row of orifices (R4), formed in a third one of the profile elements, called front profile (12C), and the fifth row of orifices (R5), formed in a fourth one of the profile elements, called rear profile (12D), the front and rear profiles being arranged at two opposite ends of the core (10), respectively called front end (10C) and rear end (10D), each of which links the upper end (10A) to the lower end (10B) of the core, such that the base (14) of the front profile (12C) forms said front portion of the main web (39) and such that the flange (16C) of the front profile forms said front flange (16C), and such that the base (14) of the rear profile (12D) forms said rear portion of the main web (39) and such that the flange of the rear profile (12D) forms said rear flange (16D).

8. A method for producing a central wing module (64) for aircraft, comprising at least steps of:
A) producing at least one junction rib (37) as claimed in any one of claims 1 to 3, potentially by means of the method as claimed in any one of claims 4 to 7;
B) providing at least one second angle fitting, called upper outer fitting (44), comprising a base (46) and a shoulder (48);
C) providing at least one strap (50);
D) providing a central wingbox (52), including at least an upper panel (54A), a lower panel (54B), a front member (54C) linking a front end of the upper panel to a front end of the lower panel, and a rear member (54D) linking a rear end of the upper panel to a rear end of the lower panel, such that the upper and lower panels and the front and rear members delimit an inner space (55) of the central wingbox (52) open at at least one lateral end (56) of the central wingbox, then
E) disposing the junction rib (37) at said lateral end (56) of the central wingbox by inserting the flanges (16A-16D) into the inner space (55) of the central wingbox, such that the upper flange (16A) is facing the upper panel (54A) and the lower flange (16B) is facing the lower panel (54B); then
F) fastening together the upper flange (16A) and the base (46) of said at least one upper outer fitting (44) to the upper panel (54A) using first through-mounted fastening components (60), and fastening together the lower flange (16B) and a proximal portion (50A) of said at least one strap (50) to the lower panel (54B) using second through-mounted fastening components (62), such that a distal portion (50B) of said at least one strap (50) extends beyond the junction surface (24) in a distancing direction relative to the central wingbox (52).

9. The method as claimed in claim 8, wherein the junction rib (37) conforms to claim 3, or wherein the step A) consists of producing the junction rib (37) according to the method of claim 7, and wherein the step F) furthermore includes fastening the front flange (16C) and rear flange (16D) respectively to the front member (54C) and the rear member (54D).

10. The method as claimed in claim 8 or 9, wherein the distal portion (50B) of said at least one strap (50) forms, in cross section, an angle (θ) relative to the proximal portion (50A) of said at least one strap.

11. The method as claimed in any one of claims 8 to 10, wherein the junction rib (37) conforms to claim 2 or wherein the step A) consists of producing the rib junction (37) according to the method of claim 6, and wherein the shoulder (48) of said at least one upper outer fitting (44) includes orifices (58) aligned respectively with the orifices (34) of the third row of orifices (R3).

12. A method for producing a fuselage section (81) for aircraft, comprising at least steps of:
i) producing a central wing module (64) for aircraft according to the method of any one of claims 8 to 11;
ii) providing a fuselage structure (66);
iii) fastening said at least one upper outer fitting (44) to the fuselage structure (66).

13. The method as claimed in claim 12, wherein:
- the step A) of the step i) consists of producing the junction rib (37) according to the method of claim 6;
- the fuselage structure (66) includes circumferential frames provided with third respective angle fittings, called outer frame supports (72), each comprising a respective base (74) and a shoulder (76); and
- the step iii) includes fastening the respective shoulders (76) of the outer frame supports (72) respectively to the respective shoulders (32) of the inner frame supports (28) using third through-mounted fastening components (78).

14. The method as claimed in claim 12 or 13, wherein:
- the junction rib (37) conforms to claim 2;
- the fuselage structure (66) includes a skin (70); and
- the step iii) includes fastening the skin (70) to the extension (14B) using fourth through-mounted fastening components (80).

15. A method for producing an aircraft (120), comprising at least steps of:
I) producing a fuselage section (81) according to the method of any one of claims 12 to 14;
II) providing at least one wing (82) including a lateral wing box (84) delimiting an inner space (85); then
III) positioning an end (86) of the lateral wingbox (84) to face the junction surface (24), such that the distal portion (50B) of said at least one strap (50) is positioned outside the inner space (85) of the lateral wingbox; then
IV) fastening the lateral wingbox (84) to the junction rib (37) using fastening components (110, 112, 114) working in tension/compression engaged respectively in the orifices (34) of said rows of orifices, and fastening the lateral wingbox (84) to the distal portion (50B) of said at least one strap (50) using fifth through-mounted fastening components (116).

16. The method as claimed in claim 15, wherein:
- the lateral wingbox (84) includes an upper panel (84A) and a lower panel (84B), as well as at least one fourth angle fitting (88) and at least one fifth angle fitting (94);
- said at least one fourth and fifth angle fittings each comprise a respective base and a respective shoulder;
- the base (90) of said at least one fourth angle fitting (88) is fastened to the upper panel (84A) of the lateral wingbox, inside the inner space (85) of the lateral wingbox;
- the base (96) of said at least one fifth angle fitting (94) is fastened to the lower panel (84B) of the lateral wingbox, inside the inner space (85) of the lateral wingbox;
- said fastening components working in tension/compression comprise sixth through-mounted fastening components (110) mounted through orifices (106) formed in the shoulder (92) of said at least one fourth angle fitting (88) and orifices (34) of the first row of orifices (R1); and
- said fastening components working in tension/compression comprise seventh through-mounted fastening components (112) mounted through orifices (107) formed in the shoulder (98) of said at least one fifth angle fitting (94) and orifices (34) of the second row of orifices (R2).

17. The method as claimed in claim 16, wherein:
- the step i) of the step I) consists of producing the central wing module (64) according to the method of claim 11;
- the lateral wingbox (84) includes at least one sixth angle fitting (100) comprising a base and a shoulder;
- the base (102) of said at least one sixth angle fitting (100) is fastened to the upper panel (84A) outside the inner space (85) of the lateral wingbox; and
- said fastening components working in tension/compression comprise eighth through-mounted fastening components (114) mounted through orifices (108) formed in the shoulder (104) of said at least one sixth angle fitting (100), orifices (34) of the third row of orifices (R3) and orifices (58) of the shoulder (48) of said at least one upper outer angle fitting (44).
